# EUROPÄISCHE PATENTSCHRIFT

(11) **EP 1 692 196 B1**
(45) Veröffentlichungstag und Bekanntmachung des Hinweises auf die Patenterteilung: **13.08.2008**
(21) Anmeldenummer: 04803502.6
(22) Anmeldetag: 03.12.2004
(51) Int. Cl.: C08F 210/00, C10L 1/00, C10M 101/00

(54) **BRENNSTOFFÖLZUSAMMENSETZUNGEN MIT VERBESSERTEN KALTFLIESSEIGENSCHAFTEN**
FUEL OIL COMPOSITIONS WITH IMPROVED COLD FLOW PROPERTIES
COMPOSITIONS D'HUILES COMBUSTIBLES PRESENTANT DE MEILLEURES PROPRIETES D'ECOULEMENT A FROID

(30) Priorität: 04.12.2003 DE 10356595
(43) Veröffentlichungstag der Anmeldung: 23.08.2006
(73) Patentinhaber: BASF SE, 67056 Ludwigshafen (DE)
(72) Erfinder: AHLERS, Wolfgang, 67549 Worms (DE); FECHTENKÖTTER, Andreas, 67063 Ludwigshafen (DE); MÄHLING, Frank-Olaf, 68165 Mannheim (DE); TRÖTSCH-SCHALLER, Irene, 67281 Bissersheim (DE); EISENBEIS, Ansgar, 67273 Weisenheim am Berg (DE)
(74) Vertreter: Reitstötter - Kinzebach
(86) Internationale Anmeldenummer: PCT/EP2004/013781
(87) Internationale Veröffentlichungsnummer: WO 2005/054314

(56) Entgegenhaltungen:
- EP-A- 0 291 367
- EP-A- 1 134 273
- US-A- 3 304 261

## Beschreibung

Die Erfindung betrifft die Verwendung von Polymeren, die ein α-Olefin, einen Vinylester und einen Ester einer α,β-ungesättigten Carbonsäure einpolymerisiert enthalten, als Additiv für Brennstofföle und Schmierstoffe und insbesondere als Kaltfließverbesserer in Brennstoffölen; die mit diesen Polymeren additivierten Brennstofföle und Schmierstoffe; sowie Additivpakete, enthaltend derartige Copolymere.

### Stand der Technik:

Paraffinische Wachse enthaltende Mineralöle, wie Mitteldestillate, Diesel und Heizöle, zeigen bei Temperaturerniedrigung eine deutliche Verschlechterung der Fließeigenschaften. Die Ursache hierfür liegt in der ab der Temperatur des Cloud Points auftretenden Kristallisation längerkettiger Paraffine, die große, plättchenförmige Wachskristalle bilden. Diese Wachskristalle besitzen eine schwammartige Struktur und führen zu einem Einschluss anderer Kraftstoffbestandteile in den Kristallverbund. Das Auftreten dieser Kristalle führt schnell zur Verklebung von Kraftstofffiltern sowohl in Tanks als auch in Kraftfahrzeugen. Bei Temperaturen unterhalb des Pour Points (PP) findet schließlich kein Fluss des Kraftstoffs mehr statt.

Zur Behebung dieser Probleme werden schon seit langer Zeit Kraftstoffadditive in kleinen Konzentrationen zugesetzt, die häufig aus Kombinationen von Nukleatoren zur frühen Bildung von Kleinstkristalliten der Paraffine mit den eigentlichen Kaltfließverbesserern (auch als CFI oder MDFI bezeichnet) bestehen. Diese wiederum zeigen ähnliche Kristallisationseigenschaften wie die Paraffine des Kraftstoffs, verhindern jedoch deren Wachstum, so dass ein Passieren des Filters bei im Vergleich zum unadditivierten Kraftstoff deutlich niedrigeren Temperaturen möglich ist. Als Maß dafür wird der sogenannte Cold Filter Plugging Point (CFPP) bestimmt. Als weiteres Additiv können sogenannte Wax Anti Settling Additive (WASA) eingesetzt werden, die das Absinken der Kleinstkristallite im Kraftstoff verhindern.

Kaltfließverbesserer werden je nach Beschaffenheit des Grundkraftstoffs und des Additivs in Mengen von etwa 50 bis 500 ppm zudosiert. Es sind aus dem Stand der Technik verschiedene CFI-Produkte bekannt (vgl. z.B. US-A-3,038,479, 3,627,838 und 3,961,961, EP-A-0,261,957 oder DE-A-31 41 507 und 25 15 805). Gängige CFI sind gewöhnlich polymere Verbindungen, insbesondere Ethylen-Vinylacetat(EVA)-Copolymere, wie z.B. die unter dem Handelsnamen Keroflux von der BASF AG vertriebenen Produkte.

Auch Kombinationen von herkömmlichen CFI mit Schmierfähigkeitsverbesserern (Estern von Mono- oder Polycarbonsäuren mit Mono- oder Polyalkoholen) werden als verbesserte CFI-Kombinationen beschrieben (EP-A-0 721 492).

Die EP 0922716 beschreibt ein Verfahren zur Herstellung von Terpolymeren, die neben Ethylen wenigstens zwei weitere ethylenisch ungesättigte Verbindungen, wie Vinylester, Acryl- bzw. Methacrylsäureester, Alkylvinylether oder höhere Olefine, einpolymerisiert enthalten. Diese sollen als Fließpunktverbesserer von Mineralöldestillaten geeignet sein.

Die DE 1902925 beschreibt Terpolymere, die Ethylen, Vinylester kurzkettiger Carbonsäuren, wie Vinylacetat, und langkettige ungesättigte Monoester, wie Vinylester langkettiger Carbonsäuren oder Acrylester, die sich von langkettigen Alkoholen ableiten, einpolymerisiert enthalten. Diese sollen den Stockpunkt von Mitteldestillaten senken und deren Filtrierbarkeit verbessern.

Die US 4,156,434 beschreibt Terpolymere, die neben Ethylen und Vinylacetat einen Acrylester, der sich von C₁₂-C₂₄-Alkoholen ableitet, einpolymerisiert enthalten. Diese sollen den Stockpunkt von Gasölen erniedrigen. Eine die Filtrierbarkeit verbessernde Wirkung wird nicht beschrieben.

Es besteht ein fortwährender Bedarf an weiteren Additiven mit CFI-Eigenschaften, insbesondere solchen, welche kostengünstiger einzusetzen sind, beispielsweise deshalb, weil sie in geringerer Dosierung als handelsübliche CFI's die Kaltfließeigenschaften von Brennstoffölen oder Schmierstoffen und insbesondere die Filtrierbarkeit von Brennstoffölen verbessern.

### Kurze Beschreibung der Erfindung:

Aufgabe der vorliegenden Erfindung war es dementsprechend, neue derartige Additive bereitzustellen.

Überraschenderweise konnte diese Aufgabe gelöst werden durch die unerwartete Beobachtung, dass Polymere, die ein α-Olefin, einen Vinylester und einen C₁-C₂₀-Hydrocarbylester einer α,β-ungesättigten Carbonsäure einpolymerisiert enthalten, als CFI-Additive brauchbar sind und außerdem eine bessere Performance als herkömmliche EVA-CFI's besitzen.

Ein erster Gegenstand der Erfindung betrifft dementsprechend die Verwendung eines Polymers, das ein α-Olefin, einen Vinylester und einen C₁-C₂₀-Hydrocarbylester einer α,β-ungesättigten Carbonsäure einpolymerisiert enthält, als Additiv für Brennstofföle und Schmierstoffe. Insbesondere werden solche Polymere eingesetzt, welche den Vinylester und den Ester der α,β-ungesättigten Carbonsäure in statistischer Verteilung einpolymerisiert enthalten. Vorzugsweise handelt es sich bei dem Polymer um ein Terpolymer, das im Wesentlichen aus den drei vorgenannten Monomeren aufgebaut ist.

Bevorzugt verwendet man Polymere, die aus Monomeren umfassend die Monomere M1, M2 und M3 aufgebaut sind, wobei M1, M2 und M3 die folgenden allgemeinen Formeln besitzen 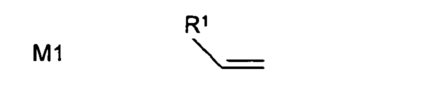 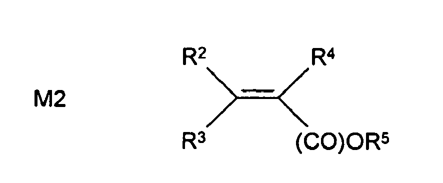 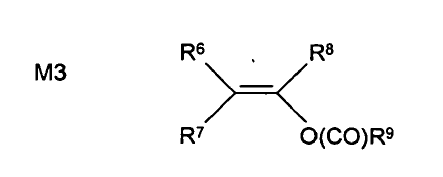 worin
R¹ für H oder C₁-C₄₀-, wie z.B. C₁-C₂₀-, insbesondere C₁-C₁₀-, vorzugsweise C₁-C₄-Hydrocarbyl steht;
R², R³ und R⁴ unabhängig voneinander für H oder C₁-C₄-Alkyl stehen;
R⁵ für C₁-C₂₀-Hydrocarbyl steht;
R⁶, R⁷ und R⁸ unabhängig voneinander für H oder C₁-C₄-Alkyl stehen; und
R⁹ für C₁-C₂₀-Hydrocarbyl steht.

In den erfindungsgemäß eingesetzten Polymeren können die Monomeren M1, M2 und M3 in folgenden molaren Anteilen (Mx/(M1+M2+M3) im Polymer enthalten sein:
M1: 0,60 bis 0,98, vorzugsweise 0,7 bis 0,95, insbesondere 0,8 bis 0,9;
M2: 0,01 bis 0,20, vorzugsweise 0,015 bis 0,17, insbesondere 0,02 bis 0,16;
M3: 0,01 bis 0,20, vorzugsweise 0,02 bis 0,15, insbesondere 0,03 bis 0,1, speziell 0,03 bis 0,09.

Vorzugsweise steht R¹ für H, Methyl oder Ethyl und insbesondere für H; d.h. das Monomer M1 steht vorzugsweise für Ethylen, Propen oder 1-Buten und insbesondere für Ethylen.

Im Monomer M2 stehen die Reste R², R³ und R⁴ vorzugsweise für H oder Methyl. Besonders bevorzugt stehen zwei der Reste R², R³ und R⁴ für H und der andere Rest steht für H oder Methyl. Insbesondere stehen alle drei Reste R², R³ und R⁴ für H.

R⁵ steht vorzugsweise für C₁-C₁₂-Hydrocarbyl, besonders bevorzugt für C₁-C₁₀-Hydrocarbyl, stärker bevorzugt für C₁-C₉-Hydrocarbyl und noch stärker bevorzugt für C₄-C₈-Hydrocarbyl. Hydrocarbyl steht dabei bevorzugt für Alkyl. Insbesondere steht R⁵ für n-Butyl, 2-Ethylhexyl oder Lauryl, wobei n-Butyl und 2-Ethylhexyl und speziell 2-Ethylhexyl noch stärker bevorzugt sind.

Bevorzugt ist das Monomer M2 unter Acrylsäure-n-butylester, Acrylsäure-2-ethylhexylester und Acrylsäurelaurylester und besonders bevorzugt unter Acrylsäure-n-butylester und Acrylsäure-2-ethylhexylester ausgewählt. Insbesondere handelt es sich um Acrylsäure-2-ethylhexylester.

Im Monomer M3 stehen R⁶, R⁷ und R⁸ unabhängig voneinander vorzugsweise für H oder Methyl und besonders bevorzugt für H.

R⁹ steht vorzugsweise für C₁-C₁₀-Hydrocarbyl. Hydrocarbyl steht dabei bevorzugt für Alkyl. Besonders bevorzugt steht R⁹ für Ethyl oder Methyl und insbesondere für Methyl.

Besonders bevorzugt handelt es sich bei dem Monomer M3 um Vinylacetat.

Bevorzugt sind die erfindungsgemäß eingesetzten Polymere erhältlich durch, vorzugsweise radikalische, Polymerisation, insbesondere Hochdruckpolymerisation, der Monomere M1, M2 und M3.

Bevorzugt verwendete Polymere sind ausgewählt unter Ethylen / Acrylsäure-n-butylester / Vinylacetat-Polymeren, Ethylen / Acrylsäure-2-ethylhexylester / Vinylacetat-Polymeren und Ethylen / Acrylsäurelaurylester / Vinylacetat-Polymeren, wobei die beiden zuerst genannten Polymere besonders bevorzugt sind. Insbesondere verwendet man Ethylen / Acrylsäure-2-ethylhexylester / Vinylacetat-Polymere.

Vorzugsweise werden die Polymere als Kaltfließverbesserer verwendet.

Die oben beschriebenen Polymere werden alleine oder in Kombination mit anderen derartigen Polymeren in Mengen eingesetzt, die ausreichen, um eine Wirkung als Kaltfließverbesserer im additivierten Brennstoff oder Schmierstoff zu zeigen.

Ein weiterer Gegenstand der Erfindung betrifft Brennstoffölzusammensetzungen, enthaltend einen größeren Gewichtsanteil eines im Bereich von etwa 120-500 °C siedenden Mitteldestillatbrennstoffs und einen kleineren Gewichtsanteil wenigstens eines erfindungsgemäß verwendeten Polymers (Kaltfließverbesserers) gemäß obigerer Definition.

Derartige Brennstoffölzusammensetzungen können weiterhin als Brennstoffkomponente Biodiesel (aus tierischer und/oder pflanzlicher Produktion) in Anteilen von 0-100 Gew.-%, vorzugsweise von 0 bis 30 Gew.-% umfassen.

Bevorzugte Brennstoffölzusammensetzungen sind ausgewählt unter Dieselkraftstoffen, Kerosin und Heizöl, wobei der Dieselkraftstoff durch Raffination, Kohlevergasung oder Gasverflüssigung erhältlich sein kann, ein Gemisch solcher Produkte darstellen und gegebenenfalls mit regenerativen Kraftstoffen vermischt sein kann. Solche Brennstoffölzusammensetzungen sind bevorzugt, in welchen der Schwefelgehalt der Mischung vorzugsweise höchstens 500 ppm beträgt.

Ein weiterer Gegenstand der Erfindung betrifft Schmierstoffzusammensetzungen, enthaltend einen größeren Gewichtsanteil eines herkömmlichen Schmierstoffs und einen kleineren Gewichtsanteil wenigstens eines Polymers gemäß obiger Definition.

Im Rahmen der vorliegenden Erfindung können die erfindungsgemäß verwendeten Polymere in Kombination mit weiteren herkömmlichen Kaltfließverbesserern und /oder weiteren Schmier- und Brennstofföladditiven verwendet werden.

Ein letzter Gegenstand der Erfindung betrifft außerdem Additivpakete, umfassend wenigstens ein erfindungsgemäß verwendetes Polymer gemäß obiger Definition in Kombination mit wenigstens einem weiteren konventionellen Schmier- und Brennstofföladditiv.

### Detaillierte Beschreibung der Erfindung:

### a) Erfindungsgemäß verwendete Polymere

Die erfindungsgemäß verwendeten Polymere sind vorzugsweise im wesentlichen aus den oben definierten Monomeren M1, M2 und M3 aufgebaut. Herstellungsbedingt können gegebenenfalls geringe Anteile einer als Regler (Ketten-Terminator) eingesetzten Verbindung enthalten sein.

Werden keine anderen Angaben gemacht, so gelten folgende allgemeine Definitionen:

C₁-C₄₀-Hydrocarbyl steht insbesondere für C₁-C₄₀-Alkyl, wie Methyl, Ethyl, n-Propyl, Isopropyl, n-Butyl, sec-Butyl, Isobutyl, tert-Butyl, Pentyl, Hexyl, Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, Nonadecyl, Eicosyl, Hencosyl, Docosyl, Tricosyl, Tetracosyl, Pentacosyl, Hexacosyl, Heptacosyl, Octacosyl, Nonacosyl, Squalyl und die höheren Homologen sowie die dazugehörigen Stellungsisomere. Analoges gilt für C₁-C₂₀-Hydrocarbylreste. C₁-C₉-Hydrocarbyl steht insbesondere für C₁-C₉-Alkyl, wie Methyl, Ethyl, n-Propyl, Isopropyl, n-Butyl, sec-Butyl, Isobutyl, tert-Butyl, Pentyl, Neopentyl, Hexyl, Heptyl, Octyl, Neooctyl, 2-Ethylhexyl, Nonyl und Neononyl. C₁-C₁₀-Hydrocarbyl steht darüber hinaus insbesondere noch für Decyl und Neodecyl. C₄-C₈-Hydrocarbyl steht insbesondere für C₄-C₈-Alkyl, wie n-Butyl, sec-Butyl, Isobutyl, tert-Butyl, Pentyl, Hexyl, Heptyl, Octyl und 2-Ethylhexyl.

Als Beispiele für geeignete Monomere M1 sind zu nennen: Mono-Alkene mit nicht-terminaler oder vorzugsweise terminaler Doppelbindung, insbesondere Ethylen, Propylen, 1-Buten, 1-Penten, 1-Hexen, 1-Hepten, 1-Octen, 1-Nonen und 1-Decen sowie die höheren einfach ungesättigten Homologen mit bis zu 40 Kohlenstoffatomen.

Als Beispiele für bevorzugte α,β-ungesättigte Carbonsäureester M2 sind zu nennen: Acrylsäureester von C₁-C₂₀-Alkanolen, wie Acrylsäuremethylester, Acrylsäureethylester, Acrylsäurepropylester, Acrylsäureisopropylester, Acrylsäure-n-butylester, Acrylsäureisobutylester, Acrylsäure-tert-butylester, Acrylsäure-n-pentylester, Acrylsäureneopentylester, Acrylsäurehexylester, Acrylsäureheptylester, Acrylsäureoctylester, Acrylsäureneooctylester, Acrylsäure-2-ethylhexylester, Acrylsäurenonylester, Acrylsäureneononylester, Acrylsäuredecylester, Acrylsäureneodecylester, Acrylsäurelaurylester, Acrylsäurepalmitylester und Acrylsäurestearylester; außerdem die entsprechenden Methacrylsäure-, Crotonsäure- und Isocrotonsäureester, wobei die Acrylate (Acrylsäureester) bevorzugt sind.

Als Beispiele für geeignete Monomere M3 sind zu nennen:

C₁-C₂₀-Carbonsäurevinylester, insbesondere die Vinylester von Essigsäure, Propionsäure, Buttersäure, Valeriansäure, Isovaleriansäure, Pivalinsäure, Capronsäure, Önanthsäure, Caprylsäure, Pelargonsäure, Neononansäure, Neodecansäure, Caprinsäure, Laurinsäure, Myristinsäure, Palmitinsäure, Stearinsäure und Arachinsäure; außerdem die entsprechenden Propenylester. Die Vinylester sind jedoch bevorzugt.

Die erfindungsgemäßen Polymere weisen außerdem ein zahlenmittleres Molekulargewicht Mₙ im Bereich von etwa 1000 bis 20000, besonders bevorzugt von 1000 bis 10000, insbesondere von 1500 bis 6000 und speziell von 1500 bis 5000 auf.

Die Polymere können auch ein gewichtsmittleres Molekulargewicht M_{w} von 1000 bis 30000, insbesondere 2000 bis 20000 und/oder ein M_{w}/Mₙ-Verhältnis von 1,5 bis 5,0, vorzugsweise von 1,8 bis 4,0 und insbesondere von 1,9 bis 3,5 aufweisen.

Besonders bevorzugte Polymere sind aufgebaut aus den Monomeren Ethylen, Vinylacetat und einem Acrylsäureester-Monomeren, der ausgewählt ist unter Acrylsäure-n-butylester, Acrylsäure-2-ethylhexylester und Acrylsäurelaurylester und vorzugsweise unter Acrylsäure-n-butylester und Acrylsäure-2-ethylhexylester. Insbesondere handelt es sich bei dem Acrylsäureester-Monomeren um Acrylsäure-2-ethylhexylester.

Bezogen auf ein Polymer aus Ethylen, Acrylsäure-2-ethylhexylester (AEH) und Vinylacetat (VAC) beträgt der Gewichtsanteil der Monomere:
AEH: 4 - 80 Gew.%, vorzugsweise 5 bis 62 Gew.%, insbesondere etwa 7 bis 45 Gew.-% VAC: 1-42 Gew.%, vorzugsweise 1 bis 30 Gew.-%, insbesondere etwa 1 bis 25 Gew.-%, speziell 1 bis 20 Gew.-%
Die Viskosität derartiger Polymere (bestimmt nach Ubbelohde DIN 51562) liegt bei etwa 5 bis 25000 mm²/s, vorzugsweise etwa 10 bis 1000 mm²/s, insbesondere etwa 50 bis 700 mm²/s jeweils bei einer Temperatur von etwa 120 °C.

### b) Herstellung der Polymere

Die erfindungsgemäßen Polymere werden nach an sich bekannten Verfahren hergestellt, vorzugsweise nach den aus dem Stand der Technik (vgl. z.B. *Ullmann's Encyclopedia of Industrial Chemistry* 5. Auflage, Stichwort: Waxes, Bd. A 28, S. 146 ff., VCH Weinheim, Basel, Cambridge, New York, Tokio, 1996; außerdem US 3,627,838; DE-A 2515805; DE-A 3141507; EP-A 0007590) bekannten Verfahren zur direkten radikalischen Hochdruck-Copolymerisation ungesättigter Verbindungen.

Die Herstellung der Polymere erfolgt bevorzugt in gerührten Hochdruckautoklaven oder in Hochdruckrohrreaktoren oder Kombinationen aus beiden. Bei ihnen verhält sich überwiegend das Verhältnis Länge/Durchmesser in Bereichen von 5:1 bis 30:1, bevorzugt 10:1 bis 20:1.

Geeignete Druckbedingungen für die Polymerisation sind 1000 bis 3000 bar, bevorzugt 1500 bis 2000 bar. Die Reaktionstemperaturen liegen z.B. im Bereich von 160 bis 320 °C, bevorzugt im Bereich von 200 bis 280 °C.

Als Regler zur Einstellung des Molekulargewichts der Copolymere verwendet man beispielsweise einen aliphatischen Aldehyd oder ein aliphatisches Keton der allgemeinen Formel I 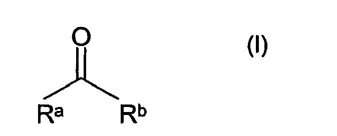 oder Mischungen derselben.

Dabei sind die Reste R^{a} und R^{b} gleich oder verschieden und ausgewählt unter
- Wasserstoff;
- C₁-C₆-Alkyl, wie Methyl, Ethyl, n-Propyl, iso-Propyl, n-Butyl, iso-Butyl, sec.-Butyl, tert.-Butyl, n-Pentyl, iso-Pentyl, sec-Pentyl, neo-Pentyl, 1,2-Dimethylpropyl, iso-Amyl, n-Hexyl, iso-Hexyl, sec-Hexyl; besonders bevorzugt C₁-C₄-Alkyl, wie Methyl, Ethyl, n-Propyl, iso-Propyl, n-Butyl, iso-Butyl, sec-Butyl und tert.-Butyl;
- C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Die Reste R^{a} und R^{b} können auch miteinander unter Bildung eines 4- bis 13-gliedrigen Rings kovalent verbunden sein. So können R^{a} und R^{b} beispielsweise gemeinsam folgende Alkylengruppen bilden: -(CH₂)₄-, -(CH₂)₅-, -(CH₂)₆, -(CH₂)₇-, -CH(CH₃)-CH₂-CH₂-CH(CH₃)- oder-CH(CH₃)-CH₂-CH₂-CH₂-CH(CH₃)-.

Die Verwendung von Propionaldehyd oder Ethylmethylketon als Regler ist ganz besonders bevorzugt.

Weitere gut geeignete Regler sind unverzweigte aliphatische Kohlenwasserstoffe, wie beispielsweise Propan oder verzweigte aliphatische Kohlenwasserstoffe mit tertiären H-Atomen, wie beispielsweise Isobutan, Isopentan, Isooctan oder Isododekan (2,2,4,6,6-Pentamethylheptan). Als weitere zusätzliche Regler können höhere Olefine, wie beispielsweise Propylen, eingesetzt werden.

Auch Mischungen der obigen Regler mit Wasserstoff oder Wasserstoff alleine sind ebenfalls bevorzugt.

Die Menge an verwendetem Regler entspricht den für das Hochdruckpolymerisationsverfahren üblichen Mengen.

Als Starter für die radikalische Polymerisation können die üblichen Radikalstarter, wie beispielsweise organische Peroxide, Sauerstoff oder Azoverbindungen, eingesetzt werden. Auch Mischungen mehrerer Radikalstarter sind geeignet. Als Radikalstarter können z.B. ein oder mehrere Peroxide, ausgewählt unter folgenden kommerziell erhältlichen Substanzen eingesetzt werden:
- Didecanoylperoxid, 2,5-Dimethyl-2,5-di(2-ethylhexanoylperoxy)hexan, tert-Amylperoxy-2-ethylhexanoat, Dibenzoylperoxid, tert-Butylperoxy-2-ethylhexanoat, tert-Butylperoxydiethylacetat, tert-Butylperoxydiethylisobutyrat, 1,4-Di(tert-butylperoxycarbo)-cyclohexan als Isomerengemisch, tert-Butylperisononanoat, 1,1-Di-(tert-butylperoxy)-3,3,5-trimethylcyclohexan, 1,1-Di-(tert-butylperoxy)-cyclohexan, Methyl-isobutylketonperoxid, tert-Butylperoxyisopropylcarbonat, 2,2-Di-tert-butylperoxy)butan oder tert-Butylperoxacetat;
- tert-Butylperoxybenzoat, Di-tert-amylperoxid, Dicumylperoxid, die isomeren Di-(tert-butylperoxyisopropyl)benzole, 2,5-Dimethyl-2,5-di-tert-butylperoxyhexan, tert-Butylcumylperoxid, 2,5-Dimethyl-2,5-di(tert-butylperoxy)-hex-3-in, Di-tert-butylperoxid, 1,3-Diisopropylmonohydroperoxid, Cumolhydroperoxid oder tert-Butylhydroperoxid;
   oder
- dimere oder trimere Ketonperoxide, so wie sie z.B. aus der EP-A-0 813 550 bekannt sind

Als Peroxide sind Di-tert-butylperoxid, tert-Butylperoxypivalat, tert-Butylperoxyisononanoat oder Dibenzoylperoxid oder Gemische derselben besonders geeignet. Als Azoverbindung sei Azobisisobutyronitril ("AIBN") beispielhaft genannt. Die Radikalstarter werden in für Polymerisationen üblichen Mengen dosiert.

In einer bevorzugten Fahrweise werden die erfindungsgemäßen Polymere so hergestellt, dass man eine Mischung der Monomeren M1, M2 und M3 in Gegenwart des Reglers bei einer Temperatur im Bereich von etwa 20 bis 50°C, wie z.B. von 30°C, vorzugsweise kontinuierlich durch einen Rührautoklaven leitet, welcher auf einem Druck im Bereich von etwa 1500 bis 2000 bar, wie z.B. von etwa 1700 bar, gehalten wird. Durch die vorzugsweise kontinuierliche Zugabe von Initiator, der in der Regel in einem geeigneten Lösemittel, wie z.B. Isododecan, gelöst ist, wird die Temperatur im Reaktor auf der gewünschten Reaktionstemperatur, wie z.B. bei 200 bis 250°C, gehalten. Das nach der Entspannung des Reaktionsgemisches anfallende Polymerisat wird dann in herkömmlicher Weise isoliert.

Abwandlungen dieser Fahrweise sind natürlich möglich und können vom Fachmann ohne unzumutbaren Aufwand vorgenommen werden. So können beispielsweise die Comonomere und der Regler getrennt dem Reaktionsgemisch zudosiert werden, die Reaktionstemperatur kann während des Verfahrens variiert werden, um nur einige Beispiele zu nennen.

### c) Brennstoffölzusammensetzungen

Unter Brennstoffölzusammensetzungen versteht man erfindungsgemäß vorzugsweise Kraftstoffe. Geeignete Kraftstoffe sind Ottokraftstoffe und Mitteldestillate, wie Dieselkraftstoffe, Heizöl oder Kerosin, wobei Dieselkraftstoff und Heizöl besonders bevorzugt sind.

Bei den Heizölen handelt es sich beispielsweise um schwefelarme oder schwefelreiche Erdölraffinate oder um Stein- oder Braunkohledestillate, die üblicherweise einen Siedebereich von 150 bis 400 °C aufweisen. Vorzugsweise handelt es sich bei den Heizölen um schwefelarme Heizöle, beispielsweise um solche mit einem Schwefelgehalt von höchstens 0,1 Gew.-%, bevorzugt von höchstens 0,05 Gew.-%, z.B. höchstens 0,005 Gew.-% oder z.B. höchstens 0,001 Gew.-%. Als Beispiele für Heizöl sei insbesondere Heizöl für häusliche Ölfeuerungsanlagen oder Heizöl EL genannt. Die Qualitätsanforderungen für solche Heizöle sind beispielsweise in DIN 51-603-1 festgelegt (vgl. auch Ullmann's Encyclopedia of Industrial Chemistry, 5. Auflage, Bd. A12, S. 617 ff., worauf hiermit ausdrücklich Bezug genommen wird).

Bei den Dieselkraftstoffen handelt es sich beispielsweise um Erdölraffinate, die üblicherweise einen Siedebereich von 100 bis 400 °C haben. Dies sind meist Destillate mit einem 95%-Punkt bis zu 360 °C oder auch darüber hinaus. Dies können aber auch sogenannte "Ultra low sulfur diesel" oder "City diesel" sein, gekennzeichnet durch einen 95%-Punkt von beispielsweise maximal 345 °C und einem Schwefelgehalt von maximal 0,005 Gew.-% oder durch einen 95%-Punkt von beispielsweise 285 °C und einem Schwefelgehalt von maximal 0,001 Gew.-%. Neben den durch Raffination erhältlichen Dieselkraftstoffen sind solche, die durch Kohlevergasung oder Gasverflüssigung ("gas to liquid" (GTL) Kraftstoffe) erhältlich sind, geeignet. Geeignet sind auch regenerative Kraftstoffe, wie Biodiesel oder Bioethanol, ihre Gemische oder Mischungen der regenerativen Kraftstoffe mit den vorstehend genannten Dieselkraftstoffe.

Besonders bevorzugt wird das erfindungsgemäße Additiv zur Additivierung von Dieselkraftstoffen mit niedrigem Schwefelgehalt, das heißt mit einem Schwefelgehalt von weniger als 0,05 Gew.-%, vorzugsweise von weniger als 0,02 Gew.-%, insbesondere von weniger als 0,005 Gew.-% und speziell von weniger als 0,001 Gew.-% Schwefel oder zur Additivierung von Heizöl mit einem niedrigen Schwefelgehalt, beispielsweise mit einem Schwefelgehalt von höchstens 0,1 Gew.-%, bevorzugt von höchstens 0.05 Gew.-%, z.B. höchstens 0,005 Gew.-% oder z.B. höchstens 0,001 Gew.-%, verwendet.

Das erfindungsgemäße Additiv wird vorzugsweise in einem Mengenanteil, bezogen auf die Gesamtmenge der Brennstoffölzusammensetzung, eingesetzt, der für sich gesehen einen im wesentlichen ausreichenden Einfluss auf die Kaltfließeigenschaften der Brennstoffölzusammensetzungen besitzt. Bevorzugt wird das Additiv in einer Menge von 0,001 bis 1 Gew.-%, besonders bevorzugt von 0,01 bis 0,15 Gew.-%, insbesondere von 0,01 bis 0,1 Gew.-%, bezogen auf die Gesamtmenge der Brennstoffölzusammensetzung, eingesetzt.

### d) Co-Additive

Die erfindungsgemäßen Polymere können einzeln oder als Gemisch solcher Polymere und gegebenenfalls in Kombination mit weiteren an sich bekannten Zusatzstoffen den Brennstoffölzusammensetzungen zugegeben werden.

Geeignete Zusatzstoffe, die in erfindungsgemäßen Brennstoffölen neben den erfindungsgemäßen Polymer enthalten sein können, insbesondere für Dieselkraftstoffe und Heizöle, umfassen Detergentien, Korrosionsinhibitoren, Dehazer, Demulgatoren, Schaumverhinderer ("Antifoam"), Antioxidantien, Metalldesaktivatoren, multifunktionelle Stabilisatoren, Cetanzahlverbesserer, Verbrennungsverbesserer, Farbstoffe, Marker, Lösungsvermittler, Antistatika, Schmierfähigkeitsverbesserer, sowie weitere die Kälteeigenschaften des Brennstoffs verbessernde Additive, wie Nukleatoren, weitere herkömmliche Fließverbesserer ("MDFI"), Paraffindispergatoren ("WASA") und die Kombination der beiden zuletzt genannten Additive ("WAFI") (vgl. auch Ullmann's Encyclopedia of Industrial Chemistry, 5. Auflage, Bd.A16, S.719 ff; oder die eingangs zitierten Patentschriften zur Fließverbesserern).

Als weitere konventionelle Kaltfließverbesserer sind insbesondere zu nennen:
(a) Copolymere von Ethylen mit wenigstens einem weiteren ethylenisch ungesättigten Monomer, die von den erfindungsgemäß verwendeten Polymeren verschieden sind;
(b) Kammpolymere;
(c) Polyoxyalkylene;
(d) polare Stickstoffverbindungen;
(e) Sulfocarbonsäuren oder Sulfonsäuren oder deren Derivate; und
(f) Poly(meth)acrylsäureester.
   Bei den Copolymeren von Ethylen mit wenigstens einem weiteren ethylenisch ungesättigten Monomer (a) ist das Monomer vorzugsweise ausgewählt unter Alkenylcarbonsäureestern, (Meth)Acrylsäureestem und Olefinen.

Geeignete Olefine sind beispielsweise solche mit 3 bis 10 Kohlenstoffatomen sowie mit 1 bis 3, vorzugsweise mit 1 oder 2, insbesondere mit einer, Kohlenstoff-Kohlenstoff-Doppelbindung. Im zuletzt genannten Fall kann die Kohlenstoff-Kohlenstoff-Doppelbindung sowohl terminal (α-Olefine) als auch intern angeordnet sein kann. Bevorzugt sind jedoch α-Olefine, besonders bevorzugt α-Olefine mit 3 bis 6 Kohlenstoffatomen, wie Propen, 1-Buten, 1-Penten und 1-Hexen.

Geeignete (Meth)Acrylsäureester sind beispielsweise Ester der (Meth)Acrylsäure mit C₁-C₁₀-Alkanolen, insbesondere mit Methanol, Ethanol, Propanol, Isopropanol, n-Butanol, sec-Butanol, Isobutanol, tert-Butanol, Pentanol, Hexanol, Heptanol, Octanol, 2-Ethylhexanol, Nonanol und Decanol.

Geeignete Alkenylcarbonsäureester sind beispielsweise die Vinyl- und Propenylester von Carbonsäuren mit 2 bis 20 Kohlenstoffatomen, deren Kohlenwasserstoffrest linear oder verzweigt sein kann. Bevorzugt sind hierunter die Vinylester. Unter den Carbonsäuren mit verzweigtem Kohlenwasserstoffrest sind solche bevorzugt, deren Verzweigung sich in der a-Position zur Carboxylgruppe befindet, wobei das a-Kohlenstoffatom besonders bevorzugt tertiär ist, d. h. die Carbonsäure eine sogenannte Neocarbonsäure ist. Vorzugsweise ist der Kohlenwasserstoffrest der Carbonsäure jedoch linear.

Beispiele für geeignete Alkenylcarbonsäureester sind Vinylacetat, Vinylpropionat, Vinylbutyrat, Vinyl-2-ethylhexanoat, Neopentansäurevinylester, Hexansäurevinylester, Neononansäurevinylester, Neodecansäurevinylester und die entsprechenden Propenylester, wobei die Vinylester bevorzugt sind. Ein besonders bevorzugter Alkenylcarbonsäureester ist Vinylacetat.

Besonders bevorzugt ist das ethylenisch ungesättigte Monomer ausgewählt unter Alkenylcarbonsäureestern.

Geeignet sind auch Copolymere, die zwei oder mehrere voneinander verschiedene Alkenylcarbonsäureester einpolymerisiert enthalten, wobei diese sich in der Alkenylfunktion und/oder in der Carbonsäuregruppe unterscheiden. Ebenfalls geeignet sind Copolymere, die neben dem/den Alkenylcarbonsäureester(n) wenigstens ein Olefin und/oder wenigstens ein (Meth)Acrylsäureester einpolymerisiert enthalten.

Das ethylenisch ungesättigte Monomer ist im Copolymer in einer Menge von vorzugsweise 1 bis 50 Mol.%, besonders bevorzugt von 10 bis 50 Moi.-% und insbesondere von 5 bis 20 Mol.-%, bezogen auf das Gesamtcopolymer, einpolymerisiert.

Das Copolymer (a) weist vorzugsweise ein zahlenmittleres Molekulargewicht Mₙ von 1000 bis 20000, besonders bevorzugt von 1000 bis 10000 und insbesondere von 1000 bis 6000, auf.

Kammpolymere (b) sind beispielsweise solche, die in "Comb-Like Polymers. Structure and Properties", N. A. Platé und V. P. Shibaev, J. Poly. Sci. Macromolecular Revs. 8, Seiten 117 bis 253 (1974) beschrieben sind. Von den dort beschriebenen sind beispielsweise Kammpolymere der Formel II geeignet 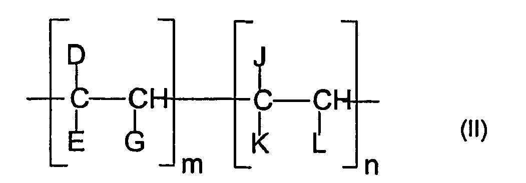 worin
D für R¹⁷, COOR¹⁷, OCOR¹⁷, R¹⁸, OCOR¹⁷ oder OR¹⁷ steht,
E für H, CH₃, D oder R¹⁸ steht,
G für H oder D steht, -
J für H, R¹⁸, R¹⁸COOR¹⁷, Aryl oder Heterocyclyl steht,
K für H, COOR¹⁸, OCOR¹⁸, OR¹⁸ oder COOH steht,
L für H, R¹⁸ COOR¹⁸, OCOR¹⁸, COOH oder Aryl steht,
wobei
R¹⁷ für einen Kohlenwasserstoffrest mit wenigstens 10 Kohlenstoffatomen, vorzugsweise mit 10 bis 30 Kohlenstoffatomen, steht,
R¹⁸ für einen Kohlenwasserstoffrest mit wenigstens einem Kohlenstoffatom, vorzugsweise mit 1 bis 30 Kohlenstoffatomen, steht,
m für einen Molenbruch im Bereich von 1,0 bis 0,4 steht und
n für einen Molenbruch im Bereich von 0 bis 0,6 steht.

Bevorzugte Kammpolymere sind beispielsweise durch die Copolymerisation von Maleinsäureanhydrid oder Fumarsäure mit einem anderen ethylenisch ungesättigten Monomer, beispielsweise mit einem α-Olefin oder einem ungesättigten Ester, wie Vinylacetat, und anschließende Veresterung der Anhydrid- bzw. Säurefunktion mit einem Alkohol mit wenigstens 10 Kohlenstoffatomen erhältlich. Weitere bevorzugte Kammpolymere sind Copolymere von α-Olefinen und veresterten Comonomeren, beispielsweise veresterte Copolymere von Styrol und Maleinsäureanhydrid oder veresterte Copolymere von Styrol und Fumarsäure. Auch Gemische von Kammpolymeren sind geeignet. Kammpolymere können auch Polyfumarate oder Polymaleinate sein. Außerdem sind Homo- und Copolymere von Vinylethern geeignete Kammpolymere.

Geeignete Polyoxyalkylene (c) sind beispielsweise Polyoxyalkylenester, -ether, -ester/ether und Gemische davon. Bevorzugt enthalten die Polyoxyalkylenverbindungen wenigstens eine, besonders bevorzugt wenigstens zwei lineare Alkylgruppen mit 10 bis 30 Kohlenstoffatomen und eine Polyoxyalkylengruppe mit einem Molekulargewicht von bis zu 5000. Die Alkylgruppe des Polyoxyalkylenrestes enthält dabei vorzugsweise 1 bis 4 Kohlenstoffatome. Derartige Polyoxyalkylenverbindungen sind beispielsweise in der EP-A-0 061 895 sowie in der US 4,491,455 beschrieben, worauf hiermit im vollem Umfang Bezug genommen wird. Bevorzugte Polyoxyalkylenester, -ether und ester/ether besitzen die allgemeine Formel III

R¹⁹[-O-(CH₂)_{y}]ₓO-R²⁰ (III)

worin
R¹⁹ und R²⁰ jeweils unabhängig voneinander für R²¹, R²¹-CO-, R²¹-O-CO(CH₂)_{z}- oder R²¹-O-CO(CH₂)_{z}-CO- stehen, wobei R²¹ für lineares C₁-C₃₀-Alkyl steht,
y für eine Zahl von 1 bis 4 steht,
x für eine Zahl von 2 bis 200 steht, und
z für eine Zahl von 1 bis 4 steht.

Bevorzugte Polyoxyalkylenverbindungen der Formel III, in denen sowohl R¹⁹ als auch R²⁰ für R²¹ stehen, sind Polyethylenglykole und Polypropylenglykole mit einem zahlenmittleren Molekulargewicht von 100 bis 5000. Bevorzugte Polyoxyalkylene der Formel III, in denen einer der Reste R¹⁹ für R²¹ und der andere für R²¹-CO- steht, sind Polyoxyalkylenester von Fettsäuren mit 10 bis 30 Kohlenstoffatomen, wie Stearinsäure oder Behensäure. Bevorzugte Polyoxyalkylenverbindungen, in denen sowohl R¹⁹ als auch R²⁰ für einen Rest R²¹-CO- stehen, sind Diester von Fettsäuren mit 10 bis 30 Kohlenstoffatomen, bevorzugt von Stearin- oder Behensäure.

Die polaren Stickstoffverbindungen (d), die geeigneterweise öllöslich sind, können sowohl ionisch als auch nicht ionisch sein und besitzen vorzugsweise wenigstens einen, besonders bevorzugt wenigstens 2 Substituenten der Formel >NR²², worin R²² für einen C₈-C₄₀-Kohlenwasserstoffrest steht. Die Stickstoffsubstituenten können auch quaternisiert, das heißt in kationischer Form, vorliegen. Ein Beispiel für solche Stickstoffverbindungen sind Ammoniumsalze und/oder Amide, die durch die Umsetzung wenigstens eines mit wenigstens einem Kohlenwasserstoffrest substituierten Amins mit einer Carbonsäure mit 1 bis 4 Carboxylgruppen bzw. mit einem geeignetem Derivat davon erhältlich sind. Vorzugsweise enthalten die Amine wenigstens einen linearen C₈-C₄₀-Alkylrest. Geeignete primäre Amine sind beispielsweise Octylamin, Nonylamin, Decylamin, Undecylamin, Dodecylamin, Tetradecylamin und die höheren linearen Homologen. Geeignete sekundäre Amine sind beispielsweise Dioctadecylamin und Methylbehenylamin. Geeignet sind auch Amingemische, insbesondere großtechnisch zugänglicher Amingemische, wie Fettamine oder hydrierte Tallamine, wie sie beispielsweise in Ullmanns Encyclopedia of Industrial Chemistry, 6th edition, 2000 electronic release, Kapitel "Amines, aliphatic" beschrieben werden. Für die Umsetzung geeignete Säuren sind beispielsweise Cyclohexan-1,2-Dicarbonsäure, Cyclohexen-1,2-Dicarbonsäure, Cyclopentan-1,2-Dicarbonsäure, Naphthalindicarbonsäure, Phthalsäure, Isophthalsäure, Terephthalsäure und mit langkettigen Kohlenwasserstoffresten substituierte Bernsteinsäuren.

Ein weiteres Beispiel für polare Stickstoffverbindungen sind Ringsysteme, die wenigstens zwei Substituenten der Formel -A-NR²³R²⁴ tragen, worin A für eine lineare oder verzweigte aliphatische Kohlenwasserstoffgruppe steht, die gegebenenfalls durch eine oder mehrere Gruppen, die ausgewählt sind unter O, S, NR³⁵ und CO, unterbrochen ist, und R²³ und R²⁴ für einen C₉-C₄₀-Kohfenwasserstoffrest stehen, der gegebenenfalls durch eine oder mehrere Gruppen, die ausgewählt sind unter O, S, NR³⁵ und CO, unterbrochen und/oder durch einen oder mehrere Substituenten, die ausgewählt sind unter OH, SH und NR³⁵R³⁶ substituiert ist, wobei R³⁵ für C₁-C₄₀-Alkyl, das gegebenenfalls durch eine oder mehrere Gruppierungen, die ausgewählt sind unter CO, NR³⁵, O und S, unterbrochen, und/oder durch einen oder mehrere Reste, die ausgewählt sind unter NR³⁷R³⁸, OR³⁷, SR³⁷, COR³⁷, COOR³⁷, CONR³⁷R³⁸, Aryl oder Heterocyclyl substituiert ist, wobei R³⁷ und R³⁸ jeweils unabhängig voneinander ausgewählt sind unter H oder C₁-C₄-Alkyl; und R³⁶ für H oder R³⁵ steht.

Vorzugsweise ist A eine Methylen- oder Polymethylengruppe mit 2 bis 20 Methyleneinheiten. Beispiele für geeignete Reste R²³ und R²⁴ sind 2-Hydroxyethyl, 3-Hydroxypropyl, 4-Hydroxybutyl, 2-Ketopropyl, Ethoxyethyl und Propoxypropyl. Bei dem cyclischen System kann es sich sowohl um homocyclische, heterocyclische, kondensierte polycyclische oder nicht kondensierte polycyclische Systeme handeln. Vorzugsweise ist das Ringsystem carbo- oder heteroaromatisch, insbesondere carboaromatisch. Beispiele für derartige polycyclische Ringsysteme sind kondensierte benzoide Strukturen, wie Naphthalin, Anthracen, Phenanthren und Pyren, kondensierte nichtbenzoide Strukturen, wie Azulen, Inden, Hydrinden und Fluoren, nicht kondensierte Polycyclen, wie Diphenyl, Heterocyclen, wie Chinolin, Indol, Dihydroindol, Benzofuran, Cumarin, Isocumarin, Benzthiophen, Carbazol, Diphenylenoxid und Diphenylensulfid, nicht aromatische oder teilweise gesättigte Ringsysteme, wie Decalin, und dreidimensionale Strukturen, wie α-Pinen, Camphen, Bornylen, Norbonan, Norbonen, Bicyclooctan und Bicycloocten.

Ein weiteres Beispiel für geeignete polare Stickstoffverbindungen sind Kondensate von langkettigen primären oder sekundären Aminen mit Carboxylgruppen-haltigen Polymeren.

Die hier genannten polaren Stickstoffverbindungen sind in der WO 00/44857 sowie in den darin genannten Literaturstellen beschrieben, worauf hiermit im vollem Umfang Bezug genommen wird.

Geeignete polare Stickstoffverbindungen sind z.B. auch in der DE-A-198 48 621 der DE-A-196 22 052 oder der EP-B-398 101 beschrieben, worauf hiermit Bezug genommen wird.

Geeignete Sulfocarbonsäuren/Sulfonsäuren bzw. deren Derivate (e) sind beispielsweise solche der allgemeinen Formel IV 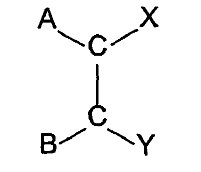 worin
Y für SO₃⁻(NR²⁵₃R²⁶)⁺, SO₃⁻(NHR²⁵₂R²⁶)⁺, SO₃⁻(NH₂R²⁵R²⁶), SO₃⁻(NH₃R²⁶) oder SO₂NR²⁵R²⁶ steht,
X für Y, CONR²⁵R²⁷, CO₂⁻(NR²⁵₃R²⁷)⁺, CO₂⁻(NHR²⁵₂R²⁷)⁺, R²⁸-COOR²⁷, NR²⁵COR²⁷, R²⁸OR²⁷, R²⁸OCOR²⁷, R²⁸R²⁷, N(COR²⁵)R²⁷ oder Z⁻(NR²⁵₃R²⁷)⁺ steht,
wobei
R²⁵ für einen Kohlenwasserstoffrest steht,
R²⁶ und R²⁷ für Alkyl, Alkoxyalkyl oder Polyalkoxyalkyl mit wenigstens 10 Kohlenstoffatomen in der Hauptkette stehen,
R²⁸ für C₂-C₅-Alkylen steht,
Z⁻ für ein Anionenäquivalent steht und
A und B für Alkyl, Alkenyl oder zwei substituierte Kohlenwasserstoffreste stehen oder gemeinsam mit den Kohlenstoffatomen, an die sie gebunden sind, ein aromatisches oder cycloaliphatisches Ringsystem bilden.

Derartige Sulfocarbonsäuren bzw. Sulfonsäuren und ihre Derivate sind in der EP-A-0 261 957 beschrieben, worauf hiermit im vollem Umfang Bezug genommen wird.

Geeignete Poly(meth)acrylsäureester (f) sind sowohl Homo- als auch Copolymere von Acryl-und Methacrylsäureestern. Bevorzugt sind Acrylsäureester-Homopolymere, die sich von C₁-C₄₀-Alkoholen ableiten. Bevorzugt sind auch Copolymere von wenigstens zwei voneinander verschiedenen (Meth)Acrylsäureestern, die sich bezüglich des einkondensierten Alkohols unterscheiden. Gegebenenfalls enthält das Copolymer noch ein weiteres, davon verschiedenes olefinisch ungesättigtes Monomer einpolymerisiert. Das gewichtsmittlere Molekulargewicht des Polymers beträgt vorzugsweise 50000 bis 500000. Ein besonders bevorzugtes Polymer ist ein Copolymer von Methacrylsäure und Methacrylsäureestern von gesättigten C₁₄- und C₁₅-Alkoholen, wobei die Säuregruppen mit hydriertem Tallamin neutralisiert sind. Geeignete Poly(meth)acrylsäureester sind beispielsweise in der WO 00/44857 beschrieben, worauf hiermit in vollem Umfang Bezug genommen wird.

### e) Additivpakete

Schließlich ist Gegenstand der vorliegenden Anmeldung ein Additivkonzentrat, enthaltend wenigstens ein wie vorstehend definiertes erfindungsgemäßes Polymer und wenigstens ein Verdünnungsmittel sowie gegebenenfalls mindestens einen weiteren Zusatzstoff, insbesondere ausgewählt unter obigen Co-Additiven.

Geeignete Verdünnungsmittel sind beispielsweise bei der Erdölverarbeitung anfallende Fraktionen, wie Kerosin, Naphtha oder Brightstock. Geeignet sind darüber hinaus aromatische und aliphatische Kohlenwasserstoffe und Alkoxyalkanole. Bei Mitteldestillaten, insbesondere bei Dieselkraftstoffen und Heizölen bevorzugt verwendete Verdünnungsmittel sind Naphtha, Kerosin, Dieselkraftstoffe, aromatische Kohlenwasserstoffe, wie Solvent Naphtha schwer, Solvesso® oder Shellsol® sowie Gemische dieser Lösungs- und Verdünnungsmittel.

Das erfindungsgemäße Polymer liegt in den Konzentraten vorzugsweise in einer Menge von 0,1 bis 80 Gew.-%, besonders bevorzugt von 1 bis 70 Gew.-% und insbesondere von 20 bis 60 Gew.-%, bezogen auf das Gesamtgewicht des Konzentrats, vor.

Die Erfindung wird nun anhand der folgenden nicht einschränkenden Beispiele näher erläutert.

### Experimenteller Teil:

### a) Herstellunqsbeispiele 1 bis 23

Es wurden insgesamt 23 verschiedene erfindungsgemäße Polymere durch Hochdruckpolymerisation von Ethylen, Acrylsäure-2-ethylhexylester (AEH) und Vinylacetat (VAC) hergestellt.

In Tabelle 1 sind die Eigenschaften der in den nachfolgenden Testbeispielen eingesetzten Polymerisate zusammengestellt.

Der Gehalt an Ethylen, AEH und VAC in den erhaltenen Polymeren wurde NMRspektroskopisch bestimmt. Die Viskositäten wurden nach Ubbelohde DIN 51562 bestimmt.

**Tabelle 1**

| **Polymer Nr.** | **E [Mol-%]** | **VAC [Mol-%]** | **AEH [Mol-%]** | **Viskosität [mm²/s]** | **Mₙ** | **M_{w}** | **M_{w}/Mₙ** |
|---|---|---|---|---|---|---|---|
| 1 | 88,0 | 4,2 | 7,8 | 60 | 2088 | 4189 | 2,01 |
| 2 | 88,0 | 4,4 | 7,6 | 150 | 2959 | 6666 | 2,25 |
| 3 | 88,1 | 4,4 | 7,5 | 605 | 4635 | 12811 | 2,76 |
| 4 | 86,6 | 3,9 | 9,5 | 60 | 2124 | 4285 | 2,02 |
| 5 | 86,4 | 4,3 | 9,3 | 150 | 3022 | 6754 | 2,23 |
| 6 | 86,4 | 4,1 | 9,5 | 595 | 4797 | 13238 | 2,76 |
| 7 | 83,8 | 4,1 | 12,1 | 60 | 2064 | 4280 | 2,07 |
| 8 | 83,2 | 4,4 | 12,4 | 150 | 2994 | 7203 | 2,41 |
| 9 | 83,1 | 4,4 | 12,5 | 600 | 4744 | 14503 | 3,06 |
| 10 | 80,2 | 4,5 | 15,3 | 150 | 3038 | 7279 | 2,40 |
| 11 | 80,4 | 4,1 | 15,5 | 600 | 4681 | 15697 | 3,35 |
| 12 | 89,6 | 8,0 | 2,4 | 60 | 1977 | 3910 | 1,98 |
| 13 | 89,8 | 7,9 | 2,3 | 150 | 2831 | 6212 | 2,19 |
| 14 | 89,2 | 8,2 | 2,6 | 605 | 3862 | 11098 | 2,87 |
| 15 | 89,8 | 8,4 | 4,8 | 60 | 1928 | 3902 | 2,02 |
| 16 | 86,5 | 8,4 | 5,1 | 150 | 2926 | 6337 | 2,17 |
| 17 | 86,3 | 8,5 | 5,2 | 620 | 4613 | 12019 | 2,61 |
| 18 | 84,2 | 8,1 | 7,7 | 60 | 2003 | 4025 | 2,01 |
| 19 | 83,1 | 8,7 | 8,2 | 150 | 2855 | 6382 | 2,24 |
| 20 | 84,3 | 8,0 | 7,7 | 615 | 4858 | 13061 | 2,69 |
| 21 | 81,1 | 7,9 | 11,0 | 60 | 2100 | 4276 | 2,04 |
| 22 | 80,8 | 8,0 | 11,2 | 150 | 2878 | 6634 | 2,31 |
| 23 | 81,1 | 7,6 | 11,3 | 630 | 4774 | 14263 | 2,99 |

| | | | | | | | |
|---|---|---|---|---|---|---|---|
| E: Ethylen AEH: Acrylsäure-2-ethylhexylester VAC: Vinylacetat | | | | | | | |

### b) Testbeispiele 1 bis 4

Mit den oben hergestellten Polymeren 1 bis 23 wurden die nachfolgenden Versuche durchgeführt. Zu Vergleichszwecken wurden folgende herkömmliche MDFI mitgetestet
- Vergleichsprodukt A:: Ethylen-Vinylacetat-basierte Polymermischung; 60 % Polymergehalt (Keroflux 6100, BASF AG)
- Vergleichsprodukt B:: Ethylen-Vinylacetat-basierte Polymermischung; 50 % Polymergehalt (Keroflux 6103, BASF AG)
- Vergleichsprodukt C:: Ethylen-Terpolymer; 75 % Polymergehalt
- Vergleichsprodukt D:: Ethylen-Vinylacetat-basierte Polymermischung; 60 % Polymergehalt

Es wurden herkömmliche Mitteldesfillat-Brennstoffe mit obigen erfindungsgemäßen bzw. her kömmlichen Kaltfließverbesserern in unterschiedlichen Dosierraten additiviert und die untere Einmischtemperatur, der CP-Wert (Cloud Point; Trübungspunkt), der PP-Wert (Pour Point; Stockpunkt) und die Viskosität der Additive sowie der CFPP-Wert (Cold Filter Plugging Point) der additivierten Brennstoffe bestimmt. Die untere Einmischtemperatur wurde nach QSAA FKL 103; Abschnitt 5.4.2 (ARAL-Forschung), der CP-Wert nach ASTM D 2500, der PP-Wert der Additive nach ISO 3016, die Viskosität der Additive nach DIN 51512 und der CFPP-Wert nach DIN EN 116 bestimmt

### Testbeispiel 1: Untere Einmischtemperatur

Untersucht wurde die untere Einmischtemperatur im Mitteldestillat, wobei 50%ige Lösungen der erfindungsgemäß verwendeten Polymere in Solvent Naphtha schwer eingesetzt wurden. Die untere Einmischtemperatur ist insbesondere für solche Raffinerien von Belang, die Additive unbeheizt in Brennstofföle einmischen oder Additive in unbeheizte Brennstofföle einmischen. Ist die untere Einmischtemperatur des Additivs hoch, so kann es nach dem unbeheizten Einmischen zu Filterproblemen kommen.

Eingesetztes Mitteldestillat: Dieselkraftstoff, CP = -5 °C, CFPP = -9°C, 25 % n-Paraffine, 90-20 = 70 °C. Dosierung der Additive: 500 ppm

**Tabelle 2**

| **Additiv** | **Untere Einmischtemperatur [°C]** |
|---|---|
| kein Additiv | <10 |
| Polymer Nr.1 | 10 |
| Polymer Nr. 4 | 10 |
| Polymer Nr. 7 | 10 |
| Polymer Nr. 8 | 10 |
| Polymer Nr. 12 | 10 |
| Polymer Nr. 13 | 10 |
| Polymer Nr. 15 | 10 |
| Polymer Nr. 16 | 10 |
| Vergleichsprodukt A | 20 |
| Vergleichsprodukt C | 15 |
| Vergleichsprodukt D | 35 |

Wie die obigen Ergebnisse zeigen, besitzen die erfindungsgemäß verwendeten Polymere in der 50%igen Lösung eine deutlich niedrigere untere Einmischtemperatur als die Lösung der herkömmlichen Additive.

### Testbeispiel 2: Stockpunkt (PP) der Additive

Der PP der Additive wurde gemäß ISO 3016 bestimmt, wobei 50%ige Lösungen der Polymere in Solvent Naphtha schwer eingesetzt wurden. Der Stockpunkt der Additive spielt für die Handhabung beim Einmischen in das Brennstofföl eine wichtige Rolle. Ein möglichst tiefer PP ermöglicht die bequeme Handhabung der Additive beim Einmischen auch bei tiefen Temperaturen und erspart Heizkosten für Additiv-Tanks.

**Tabelle 3**

| **Additiv** | **PP [°C]** |
|---|---|
| Polymer Nr. 2 | 6 |
| Polymer Nr. 4 | 12 |
| Polymer Nr. 7 | -36 |
| Polymer Nr. 9 | -6 |
| Polymer Nr. 16 | -6 |
| Polymer Nr.17 | 18 |
| Polymer Nr. 19 | -18 |
| Polymer Nr. 20 | 6 |
| Vergleichsprodukt A | 21 |

Wie die obigen Ergebnisse zeigen, besitzen die erfindungsgemäßen Additive in der 50%igen Lösung einen deutlich niedrigeren Stockpunkt als die Lösung des herkömmlichen Additivs.

### Testbeispiel 3: Viskosität

Die Viskosität wurde bei 50 °C gemäß DIN 51512 bestimmt, wobei 50%ige Lösungen der erfindungsgemäß verwendeten Polymere in Solvent Naphtha eingesetzt wurden. Auch die Viskosität der Additive ist für ihre Handhabung beim Einmischen bei tiefen Temperaturen von Bedeutung.

**Tabelle 4**

| **Additiv** | η **[mm²/s]** |
|---|---|
| Polymer Nr. 2 | 40 |
| Polymer Nr. 7 | 18 |
| Polymer Nr.12 | 27 |
| Polymer Nr. 13 | 52 |
| Polymer Nr. 16 | 40 |
| Polymer Nr. 19 | 35 |
| Vergleichsprodukt A | 55 |

Wie die obigen Ergebnisse zeigen, besitzen die erfindungsgemäß verwendeten Additive in der 50%igen Lösung eine deutlich niedrigere Viskosität als die Lösung des herkömmlichen Additivs.

### Testbeispiel 4: Verbesserung der Kaltfließeictenschaften von Mitteldestillaten

### Beispiel a)

Eingesetztes Mitteldestillat: LGO, Niederlande, CP =1,7 °C, CFPP = -1 °C, 25 % n-Paraffine, 90-20 = 70 °C.
Dosierung der Additive: 1500 ppm

**Tabelle 5**

| **Additiv** | **CFPP [°C]** |
|---|---|
| Polymer Nr. 2 | -15 |
| Polymer Nr. 3 | -15 |
| Polymer Nr. 6 | -15 |
| Polymer Nr. 13 | -14 |
| Polymer Nr. 16 | -13 |
| Polymer Nr. 17 | -16 |
| Vergleichsprodukt A | -7 |
| Vergleichsprodukt B | -10 |
| Vergleichsprodukt C | -6 |
| Vergleichsprodukt D | -10 |

### Beispiel b)

Eingesetztes Mitteldestillat: Diesel, Belgien, CP = -17 °C, CFPP = -19 °C, 19 % n-Paraffine, 90-20 = 89 °C.
Dosierung der Additive: 300 ppm

**Tabelle 6**

| **Additiv** | **CFPP [°C]** |
|---|---|
| Polymer Nr. 5 | -25 |
| Polymer Nr. 16 | -25 |
| Vergleichsprodukt A | -23 |
| Vergleichsprodukt B | -23 |
| Vergleichsprodukt C | -24 |
| Vergleichsprodukt D | -23 |

### Beispiel c)

Eingesetztes Mitteldestillat:: Dieselkraftstoff, Japan, CP = -3,6 °C, CFPP = -5 °C, 21 % n-Paraffine, 90-20 = 90 °C.
Dosierung der Additive: 1500 ppm

**Tabelle 7**

| **Additiv** | **CFPP [°C]** |
|---|---|
| Polymer Nr. 6 | -14 |
| Polymer Nr.16 | -16 |
| Vergleichsprodukt A | -8 |
| Vergleichsprodukt B | -6 |
| Vergleichsprodukt C | -11 |
| Vergleichsprodukt D | -14 |

### Beispiel d)

Eingesetztes Mitteldestillat:: Dieselkraftstoff, Deutschland, CP = -3,3 °C, CFPP = -5 °C, 18 % n-Paraffine, 90-20 =101 °C.
Dosierung der Additive: 150 ppm

**Tabelle 8**

| **Additiv** | **CFPP [°C]** |
|---|---|
| Polymer Nr. 3 | -20 |
| Polymer Nr. 12 | -20 |
| Polymer Nr. 13 | -20 |
| Polymer Nr. 14 | -21 |
| Polymer Nr. 17 | -20 |
| Vergleichsprodukt A | -16 |
| Vergleichsprodukt B | -18 |
| Vergleichsprodukt C | -18 |
| Vergleichsprodukt D | -18 |

### Beispiel e)

Eingesetztes Mitteldestillat: LHO, Belgien, CP = 0 °C, CFPP = -1 °C, 18 % n-Paraffine, 90-20 = 125 °C.
Dosierung der Additive: 350 ppm

**Tabelle 9**

| Additiv | CFPP [°C] |
|---|---|
| Polymer Nr. 2 | -19 |
| Polymer Nr. 3 | -19 |
| Polymer Nr. 6 | -19 |
| Polymer Nr. 16 | -16 |
| Polymer Nr.17 | -17 |
| Polymer Nr. 20 | -18 |
| Vergleichsprodukt A | -13 |
| Vergleichsprodukt B | -13 |
| Vergleichsprodukt C | -15 |
| Vergleichsprodukt D | -13 |

### Beispiel f)

Eingesetztes Mitteldestillat: Diesel, Niederlande, CP = -5 °C, CFPP = -9 °C.
Dosierung der Additive: 400 ppm

**Tabelle 10**

| **Additiv** | **CFPP [°C]** |
|---|---|
| Polymer Nr.16 | -21 |
| Polymer Nr. 20 | -21 |
| Vergleichsprodukt A | -18 |
| Vergleichsprodukt B | -18 |
| Vergleichsprodukt C | -19 |
| Vergleichsprodukt D | -19 |

### Beispiel g)

Eingesetztes Mitteldestillat: Diesel, Polen, CP = -12 °C, CFPP = -13 °C,12 % n-Paraffine, 90-20 = 73 °C.
Dosierung der Additive: 600 ppm

**Tabelle 11**

| **Additiv** | **CFPP [°C]** |
|---|---|
| Polymer Nr. 2 | -23 |
| Polymer Nr. 15 | -22 |
| Polymer Nr. 16 | -24 |
| Vergleichsprodukt A | -18 |
| Vergleichsprodukt B | -17 |
| Vergleichsprodukt C | -21 |
| Vergleichsprodukt D | -20 |

Die in den Tabellen 5 bis 11 zusammengefassten Testergebnisse belegen eine überraschend gute Performance der erfindungsgemäß verwendeten Polymere als Cold Flow Improver in Mitteldestillatbrennstoffzusammensetzungen. Mit den erfindungsgemäßen Additiven ist es nun einerseits möglich, vergleichbare CFPP-Werte wie mit herkömmlichen MDFI's, jedoch bei geringerer Dosierrate einzustellen, bzw. bei gleicher Dosierung verbesserte CFPP-Werte zu erzielen.

Wie die Testbeispiele 1 bis 3 zeigen, ermöglichen die erfindungsgemäß verwendeten Polymere außerdem eine bessere und bequemere Handhabung, da sie bei niedrigeren Temperaturen einmischbar sind und außerdem eine geringere Viskosität und einen niedrigeren Stockpunkt aufweisen als herkömmliche Additive, so dass sie vor dem Einmischen in die Brennstofföle nicht oder weniger aufgewärmt werden müssen.

## Patentansprüche

1. Verwendung eines Polymers, das ein α-Olefin, einen Vinylester und einen C₁-C₂₀-Hydrocarbylester einer α,β-ungesättigten Carbonsäure ein polymerisiert enthält, als Additiv für Brennstofföle und Schmierstoffe.

2. Verwendung nach Anspruch 1, wobei das Polymer den Vinylester und den Ester einer α,β-ungesättigten Carbonsäure in statistischer Verteilung einpolymerisiert enthält.

3. Verwendung nach einem der vorhergehenden Ansprüche, wobei das Polymer aus Monomeren umfassend M1, M2 und M3 aufgebaut ist und wobei M1, M2 und M3 die folgenden allgemeinen Formeln besitzen: 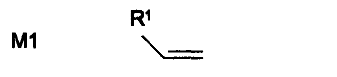 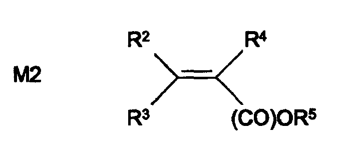 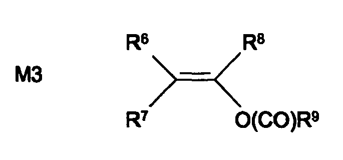 worin
R¹ für H oder C₁-C₄₀-Hydrocarbyl steht;
R², R³ und R⁴ unabhängig voneinander für H oder C₁-C₄-Alkyl stehen;
R⁵ für C₁-C₂₀-Hydrocarbyl steht;
R⁶, R⁷ und R⁸ unabhängig voneinander für H oder C₁-C₄-Alkyl stehen; und
R⁹ für C₁-C₂₀-Hydrocarbyl steht.

4. Verwendung nach Anspruch 3, wobei die Monomeren M1, M2 und M3 in folgenden molaren Anteilen im Polymer enthalten sind:
M1: 0,60 bis 0,98
M2: 0,01 bis 0,20
M3: 0,01 bis 0,20.

5. Verwendung nach einem der Ansprüche 3 oder 4, wobei Monomer M1 für Ethylen steht.

6. Verwendung nach einem der Ansprüche 3 bis 5, wobei R², R³ und R⁴ für H stehen oder zwei der Reste R², R³ und R⁴ für H stehen und der andere Rest für Methyl steht.

7. Verwendung nach einem der Ansprüche 3 bis 6, wobei R⁵ für C₁-C₉-Hydrocarbyl steht.

8. Verwendung nach Anspruch 7, wobei R⁵ für n-Butyl oder 2-Ethylhexyl steht.

9. Verwendung nach einem der Ansprüche 6 bis 8, wobei M2 für Acrylsäure-n-butylester oder für Acrylsäure-2-ethylhexylester steht.

10. Verwendung nach einem der Ansprüche 3 bis 9, wobei die M3 für Vinylacetat steht.

11. Verwendung nach einem der vorherigen Ansprüche, wobei das Polymer als Kaltfließverbesserer eingesetzt wird.

12. Brennstoffölzusammensetzung, enthaltend einen größeren Gewichtsanteil eines im Bereich von 120-500 °C siedenden Mittefdestillatbrennstoffs und einen kleineren Gewichtsanteil wenigstens eines Polymers gemäß der Definition in einem der Ansprüche 1 bis 11.

13. Brennstoffölzusammensetzung nach Anspruch 12, wobei die Brennstoffkomponente Biodiesel (aus tierischer oder pflanzlicher Produktion) in Anteilen von 0-100 Gew.-% umfasst.

14. Brennstoffölzusammensetzung nach Anspruch 12, ausgewählt unter Dieselkraftstoffen, Kerosin und Heizöl.

15. Brennstoffölzusammensetzung nach Anspruch 14, wobei der Dieselkraftstoff durch Raffination, Kohlevergasung oder Gasverflüssigung erhältlich ist, ein Gemisch solcher Produkte darstellt und gegebenenfalls mit regenerativen Kraftstoffen vermischt ist.

16. Brennstoffölzusammensetzung nach einem der Ansprüche 12 bis 15, wobei der Schwefelgehalt der Mischung höchstens 500 ppm beträgt.

17. Schmierstoffzusammensetzung, enthaltend einen größeren Gewichtsanteil eines herkömmlichen Schmierstoffs und einen kleineren Gewichtsanteil wenigstens eines Polymers gemäß der Definition in einem der Ansprüche 1 bis 10.

18. Verwendung oder Zusammensetzung nach einem der vorherigen Ansprüche, wobei das Polymer in Kombination mit weiteren herkömmlichen Kaltfließverbesserern und/oder weiteren Schmier- und Brennstofföladditiven verwendet wird.

19. Additivpaket, umfassend wenigstens ein Polymer gemäß der Definition in einem der Ansprüche 1 bis 10 in Kombination mit wenigstens einem weiteren konventionellen Schmier- oder Brennstofföladditiv.

## Claims

1. The use of a polymer which comprises, in copolymerized form, an a-olefin, a vinyl ester and a C₁-C₂₀-hydrocarbyl ester of an a,β-unsaturated carboxylic acid as an additive for fuel oils and lubricants.

2. The use according to claim 1, wherein the polymer comprises the vinyl ester and the ester of an α,β-unsaturated carboxylic acid copolymerized in random distribution.

3. The use according to any of the preceding claims, wherein the polymer is composed of monomers comprising M1, M2 and M3 and wherein M1, M2 and M3 have the following general formulae: 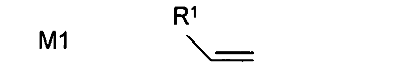 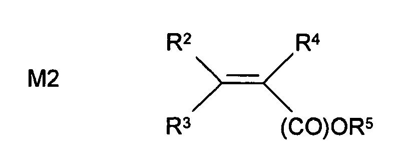 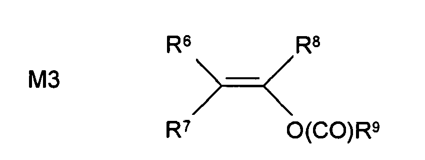 where
R¹ is H or C₁-C₄₀-hydrocarbyl;
R², R³ and R⁴ are each independently H or C₁-C₄-alkyl;
R⁵ is C₁-C₂₀-hydrocarbyl;
R⁶, R⁷ and R⁸ are each independently H or C₁-C₄-alkyl; and
R⁹ is C₁-C₂₀-hydrocarbyl.

4. The use according to claim 3, wherein the monomers M1, M2 and M3 are present in the polymer in the following molar proportions:
M1: from 0.60 to 0.98
M2: from 0.01 to 0.20
M3: from 0.01 to 0.20.

5. The use according to either of claims 3 and 4, wherein monomer M1 is ethylene.

6. The use according to any of claims 3 to 5, wherein R², R³ and R⁴ are each H or two of the R², R³ and R⁴ radicals are each H and the other radical is methyl.

7. The use according to any of claims 3 to 6, wherein R⁵ is C₁-C₉-hydrocarbyl.

8. The use according to claim 7, wherein R⁵ is n-butyl or 2-ethylhexyl.

9. The use according to any of claims 6 to 8, wherein M2 is n-butyl acrylate or 2-ethylhexyl acrylate.

10. The use according to any of claims 3 to 9, wherein M3 is vinyl acetate.

11. The use according to any of the preceding claims, wherein the polymer is used as a cold flow improver.

12. A fuel oil composition comprising a major proportion by weight of a middle distillate fuel boiling in the range of 120-500°C and a small proportion by weight of at least one polymer as defined in any of claims 1 to 11.

13. The fuel oil composition according to claim 12, wherein the fuel component comprises biodiesel (from animal or vegetable production) in proportions of 0-100% by weight.

14. The fuel oil composition according to claim 12, selected from diesel fuels, kerosene and heating oil.

15. The fuel oil composition according to claim 14, wherein the diesel fuel is obtainable by refining, coal gasification or gas liquefaction, or is a mixture of such products and is, if appropriate, mixed with renewable fuels.

16. The fuel oil composition according to any of claims 12 to 15, wherein the sulfur content of the mixture is at most 500 ppm.

17. A lubricant composition comprising a major proportion by weight of a conventional lubricant and a minor proportion by weight of at least one polymer as defined in any of claims 1 to 10.

18. The use or composition according to any of the preceding claims, wherein the polymer is used in combination with further conventional cold flow improvers and/or further lubricant and fuel oil additives.

19. An additive package comprising at least one polymer as defined in any of claims 1 to 10 in combination with at least one further conventional lubricant or fuel oil additive.

## Revendications

1. Utilisation d'un polymère qui contient sous forme polymérisée, une α-oléfine, un ester de vinyle et un ester d'hydrocarbyle en C₁-C₂₀ d'un acide carboxylique α,β-insaturé, comme additif pour des huiles combustibles et des lubrifiants.

2. Utilisation selon la revendication 1, dans laquelle le polymère contient, sous forme polymérisée, l'ester de vinyle et l'ester d'un acide a, β-insaturé en distribution statistique.

3. Utilisation selon l'une quelconque des revendications précédentes, dans laquelle le polymère est constitué de monomères comprenant les monomères M1, M2 et M3, ceux-ci répondant aux formules générales suivantes : 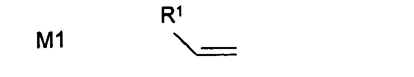 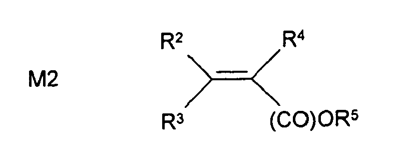 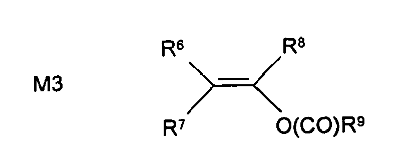 dans lesquelles :
R¹ représente l'élément H ou un hydrocarbyle en C₁-C₄₀ ;
R², R³ et R⁴ représentent, indépendamment les uns des autres, l'élément H ou un alkyle en C₁-C₄ ;
R⁵ représente un hydrocarbyle en C₁-C₂₀ ;
R⁶, R⁷ et R⁸ représentent, indépendamment les uns des autres, l'élément H ou un alkyle en C₁-C₄ ; et
R⁹ représente un hydrocarbyle en C₁-C₂₀-.

4. Utilisation selon la revendication 3, dans laquelle les monomères M1, M2 et M3 sont contenus dans le polymère selon les fractions molaires suivantes :
M1 : 0,60 à 0,98
M2 : 0,01 à 0,20
M3 : 0,01 à 0,20.

5. Utilisation selon l'une quelconque des revendications 3 ou 4, dans laquelle le monomère M1 représente un groupement éthylène.

6. Utilisation selon l'une quelconque des revendications 3 à 5, dans laquelle R², R³ et R⁴ représentent l'élément H, ou deux des résidus R², R³ et R⁴ représentent l'élément H et l'autre résidu représente un méthyle.

7. Utilisation selon l'une quelconque des revendications 3 à 6, dans laquelle R⁵ représente un hydrocarbyle en C₁-C₉.

8. Utilisation selon la revendication 7, dans laquelle R⁵ représente le n-butyle ou le 2-éthyl-hexyle.

9. Utilisation selon l'une quelconque des revendications 6 à 8, dans laquelle le monomère M2 représente l'ester n-butylique d'acide acrylique ou l'ester de 2-éthylhexyle d'acide acrylique.

10. Utilisation selon l'une quelconque des revendications 3 à 9, dans laquelle le monomère M3 représente l'acétate de vinyle.

11. Utilisation selon l'une quelconque des revendications précédentes, dans laquelle le polymère est utilisé comme un agent améliorant la fluidité à froid.

12. Composition d'huiles combustibles, contenant une fraction pondérale plus élevée d'un combustible de distillat moyen bouillant dans la plage de températures de 120 à 500 °C et une fraction pondérale plus faible d'au moins un polymère selon la définition donnée dans l'une quelconque des revendications 1 à 11.

13. Composition d'huiles combustibles selon la revendication 12, dans laquelle le composant combustible comprend un biodiesel (issu de la production animale ou végétale) dans des fractions de 0 à 100 % en poids.

14. Composition d'huiles combustibles selon la revendication 12, choisie parmi les carburants de type diesel, le kérosène et l'huile de chauffage.

15. Composition d'huiles combustibles selon la revendication 14, dans laquelle le carburant diesel est obtenu par raffinage, gazéification du charbon ou liquéfaction de gaz, représente un mélange de ces produits et, éventuellement, est mélangé à des carburants régénératifs.

16. Composition d'huiles combustibles selon l'une quelconque des revendications 12 à 15, dans laquelle la teneur en soufre du mélange est de 500 ppm au maximum.

17. Composition de lubrifiants, contenant une fraction pondérale plus élevée d'un lubrifiant courant et une fraction pondérale plus faible d'au moins un polymère selon la définition donnée dans l'une quelconque des revendications 1 à 10.

18. Utilisation ou composition selon l'une quelconque des revendications précédentes, dans laquelle le polymère est utilisé en combinaison avec d'autres agents usuels améliorant la fluidité à froid et/ou d'autres additifs pour lubrifiants et pour huiles combustibles.

19. Paquet d'additifs, comprenant au moins un polymère selon la définition donnée dans l'une quelconque des revendications 1 à 10, en combinaison avec au moins un autre additif usuel pour lubrifiants ou pour huiles combustibles.
